# EUROPEAN PATENT APPLICATION

(11) **EP 4 201 757 A1**
(43) Date of publication of application: **28.06.2023**
(21) Application number: 21861281.0
(22) Date of filing: 13.08.2021
(51) Int. Cl.: B60S 1/62

(54) **SENSING SYSTEM AND VEHICLE**

(30) Priority: 24.08.2020 JP 2020141045
(71) Applicant: KOITO MANUFACTURING CO., LTD., Minato-ku, Tokyo, 108-8711 (JP)
(72) Inventor: UCHIYAMA Daisuke, Shizuoka-shi, Shizuoka 424-8764 (JP)
(74) Representative: Cabinet Beau de Loménie
(86) International application number: PCT/JP2021/029818
(87) International publication number: WO 2022/044853

(57) **Abstract**

A left sensing system (4L) includes a controller (20L) configured to acquire information on an object existing outside a vehicle, a first camera (43L) disposed in a space formed by a translucent cover and a housing and configured to acquire first image data, and a cover cleaner (47L) configured to remove a foreign matter adhering to the translucent cover. The controller (20L) acquires the information on the object based on the first image data when no foreign matter adheres to the translucent cover. The controller (20L) acquires second image data from a second sensor disposed in interior of the vehicle, and then acquires the information on the object based on the second image data, when a foreign matter adheres to the translucent cover.

## Description

### TECHNICAL FIELD

The present disclosure relates to a sensing system and a vehicle equipped with the sensing system.

### BACKGROUND ART

Patent Literature 1 discloses an illumination unit that emits an adaptive driving beam (ADB) light distribution pattern having an illumination area and a non-illumination area toward a front area of an own vehicle in order to improve visibility of an occupant (particularly, a driver) of the own vehicle with respect to a surrounding environment. When there is a front vehicle such as a preceding vehicle or an oncoming vehicle in front of the vehicle, the illumination unit emits the ADB light distribution pattern toward the front area so that the front vehicle is included in the non-illumination area. As described above, in the ADB light distribution pattern, the visibility of the surrounding environment of the occupant of the own vehicle can be ensured without giving glare light to the occupant of the front vehicle.

### CITATION LIST

### PATENT LITERATURE

Patent Literature 1: JP2020-026248A

### SUMMARY OF INVENTION

### TECHNICAL PROBLEM

In addition, a sensor such as a camera is disposed in a lamp chamber of a vehicle lamp, and an object such as a front vehicle is detected based on image data acquired by the camera. Thereafter, an illumination controller that controls driving of the illumination unit allows the illumination unit to emit the ADB light distribution pattern toward the front area of the vehicle so that the detected object is included in the non-illumination area.

When a foreign matter adheres to a translucent cover of the vehicle lamp, it is assumed that due to a foreign matter (raindrops, snow, mud, dust, or the like) adhering to the translucent cover, information on the front vehicle (position information on the front vehicle or the like) cannot accurately acquired based on the image data from the camera. In this case, the front vehicle may overlap a part of the illumination area of the ADB light distribution pattern, which may cause glare light to be given to the occupant of the front vehicle. As described above, there is room for examination of a sensing system for a vehicle capable of preventing a decrease in recognition accuracy for an object (for example, another vehicle or the like) existing outside the vehicle even in a case where a foreign matter adheres to the translucent cover.

An object of the present disclosure is to provide a sensing system capable of preventing a decrease in recognition accuracy with respect to an object existing outside the sensing system.

### SOLUTION TO PROBLEM

A sensing system according to an aspect of the present disclosure includes:
a controller configured to acquire information on an object existing outside the sensing system;
a first sensor disposed in a space formed by a translucent cover and a housing and configured to acquire first data indicating a surrounding environment of the outside; and
a cover cleaner configured to remove a foreign matter adhering to the translucent cover.

The controller is configured to:
determine whether a foreign matter adheres to the translucent cover, and drive the cover cleaner in response to determination that a foreign matter adheres to the translucent cover;
acquire the information on the object based on the first data when no foreign matter adheres to the translucent cover; and
acquire second data indicating a surrounding environment of the outside from a second sensor disposed outside the space, and then acquire the information on the object based on the acquired second data when a foreign matter adheres to the translucent cover.

According to the above configuration, when no foreign matter adheres to the translucent cover, the information on the object existing outside the sensing system is acquired based on the first data acquired by the first sensor disposed in the space formed by the translucent cover and the housing. On the other hand, when a foreign matter adheres to the translucent cover, the information on the object is acquired based on the second data acquired by the second sensor disposed outside the space. As described above, it is possible to provide the sensing system capable of preventing a decrease in recognition accuracy with respect to an object even when a foreign matter adheres to the translucent cover.

### ADVANTAGEOUS EFFECTS OF INVENTION

According to the present disclosure, it is possible to provide the sensing system capable of preventing a decrease in recognition accuracy with respect to an object existing outside the sensing system.

### BRIEF DESCRIPTION OF DRAWINGS

Fig. 1 illustrates a front view of a vehicle.
Fig. 2 is a block diagram of a vehicle system.
Fig. 3 is a block diagram of a left sensing system.
Fig. 4 is a diagram schematically illustrating an example of an ADB light distribution pattern and a low beam light distribution pattern formed on a virtual vertical screen.
Fig. 5 is a flowchart illustrating a foreign matter adhesion determination process.
Fig. 6 is a plan view of a vehicle including a rear camera module.

### DESCRIPTION OF EMBODIMENTS

Hereinafter, an embodiment of the present disclosure (hereinafter, referred to as the present embodiment) will be described with reference to the drawings. Dimensions of respective members illustrated in the drawings may be different from actual dimensions of the respective members for convenience of description.

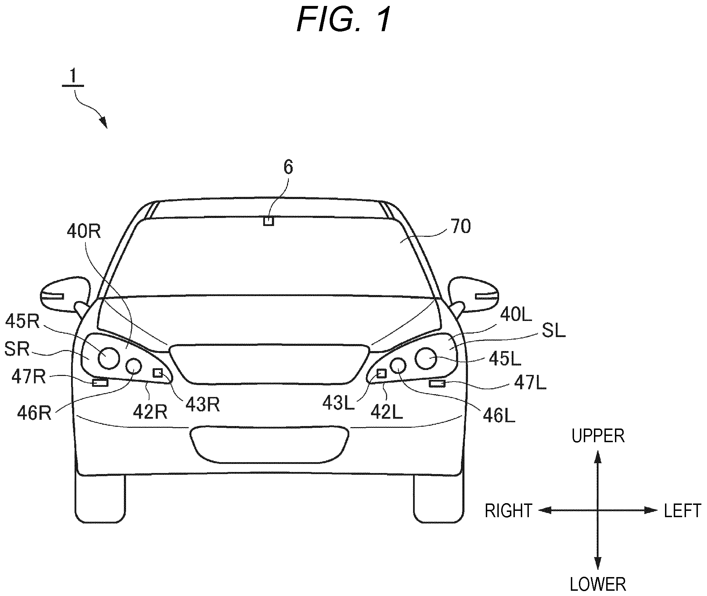

In the description of the present embodiment, for convenience of description, a "left-right direction", an "upper-lower direction", and a "front-rear direction" may be referred to as appropriate. These directions are relative directions set for a vehicle 1 illustrated in Fig. 1. Here, the "left-right direction" is a direction including a "left direction" and a "right direction". The "upper-lower direction" is a direction including an "upper direction" and a "lower direction". The "front-rear direction" is a direction including a "front direction" and a "rear direction". Although the "front-rear direction" is not illustrated in Fig. 1, the "front-rear direction" is a direction perpendicular to the left-right direction and the upper-lower direction.

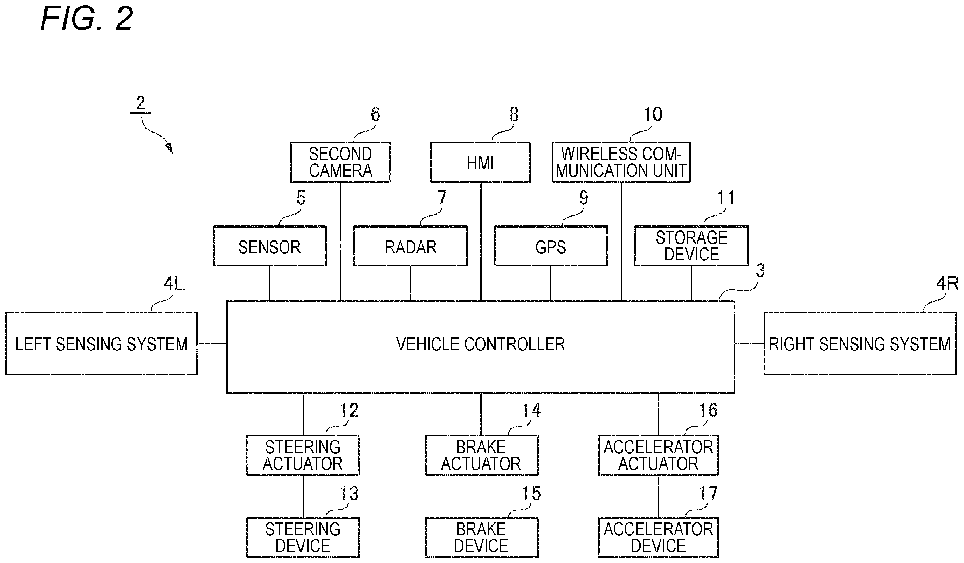

First, the vehicle 1 and a vehicle system 2 according to the present embodiment will be described with reference to Figs. 1 and 2. Fig. 1 is a front view of the vehicle 1. Fig. 2 is a block diagram of the vehicle system 2 mounted on the vehicle 1.

The vehicle 1 includes the vehicle system 2 illustrated in Fig. 2. As illustrated in Fig. 2, the vehicle system 2 includes a vehicle controller 3, a left sensing system 4L, and a right sensing system 4R. The left sensing system 4L and the right sensing system 4R are examples of a sensing system for a vehicle. The vehicle system 2 further includes a sensor 5, a second camera 6, a radar 7, a human machine interface (HMI) 8, a global positioning system (GPS) 9, a wireless communication unit 10, and a storage device 11. The vehicle system 2 further includes a steering actuator 12, a steering device 13, a brake actuator 14, a brake device 15, an accelerator actuator 16, and an accelerator device 17.

The vehicle controller 3 is configured to control traveling of the vehicle 1. The vehicle controller 3 includes, for example, at least one electronic control unit (ECU). The electronic control unit includes a computer system (for example, a system on a chip (SoC)) including one or more processors and one or more memories, and an electronic circuit including an active element such as a transistor and a passive element. The processor includes, for example, at least one of a central processing unit (CPU), a micro processing unit (MPU), and a graphics processing unit (GPU). The memory includes a read only memory (ROM) and a random access memory (RAM). The ROM may store a vehicle control program. For example, the vehicle control program may include an artificial intelligence (AI) program for automatic driving. The AI program is a program (trained model) constructed by supervised or unsupervised machine learning (in particular, deep learning) using a multilayer neural network. The RAM may temporarily store a vehicle control program, vehicle control data, and/or surrounding environment information indicating a surrounding environment of the vehicle. The processor may be configured to load a program designated from various vehicle control programs stored in the ROM onto the RAM and execute various types of processes in cooperation with the RAM.

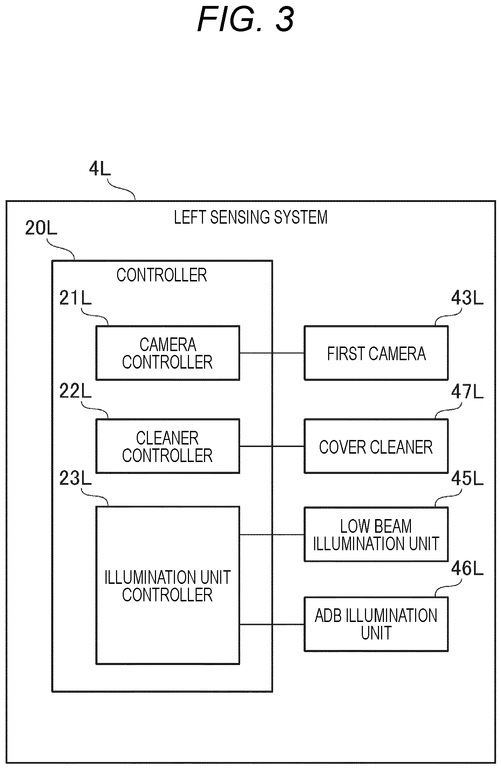

As illustrated in Fig. 3, the left sensing system 4L includes a low beam illumination unit 45L, an adaptive driving beam (ADB) illumination unit 46L, a first camera 43L, a cover cleaner 47L, and a controller 20L. The low beam illumination unit 45L, the ADB illumination unit 46L, and the first camera 43L are disposed in a space SL positioned on a left front side of the vehicle 1 (see Fig. 1). As illustrated in Fig. 1, the space SL is a lamp chamber formed by a lamp housing 42L (an example of a housing) and a translucent lamp cover 40L (an example of a translucent cover).

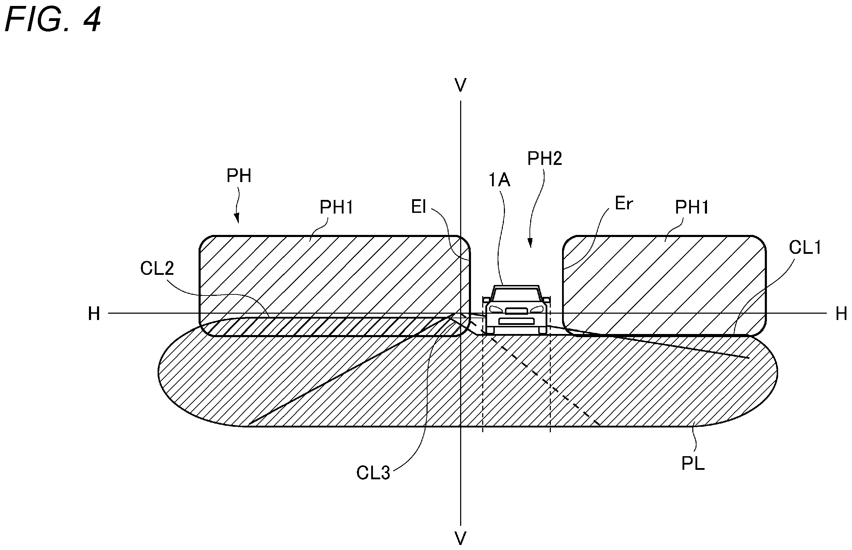

The low beam illumination unit 45L includes, for example, a light emitting element (for example, an LED) that emits light, a reflector that reflects the light emitted from the light emitting element forward, and a shade that blocks a part of the light reflected by the reflector. The low beam illumination unit 45L is configured to illuminate a low beam light distribution pattern PL (see Fig. 4) to a front area of the vehicle 1. As illustrated in Fig. 4, the low beam light distribution pattern PL is a light distribution pattern formed on a virtual vertical screen virtually disposed 25m ahead of the vehicle 1. The low beam light distribution pattern PL has an oncoming lane side cut-off line CL1, an own lane side cut-off line CL2, and an oblique cut-off line CL3 connected to these cut-off lines CL1 and CL2.

The ADB illumination unit 46L is configured to illuminate an ADB light distribution pattern PH to the front area of the vehicle 1. The ADB light distribution pattern PH is a light distribution pattern formed on the virtual vertical screen. The ADB light distribution pattern PH includes an illumination area PH1 illuminated with light and a non-illumination area PH2 not illuminated with light. In particular, when an object such as the front vehicle 1A is present in front of the vehicle 1, the ADB illumination unit 46L forms the ADB light distribution pattern PH in front of the vehicle 1 such that the object is included in the non-illumination area PH2. In this case, the front vehicle 1A is positioned between a left end portion El and a right end portion Er of the non-illumination area PH2. In this way, the glare light is suitably prevented from being applied to the object such as the front vehicle 1A. On the other hand, when there is no object in front of the vehicle 1, the ADB illumination unit 46L forms an ADB light distribution pattern (that is, a high beam light distribution pattern) including only the illumination area PH1 in front of the vehicle 1. As described above, the ADB illumination unit 46L illuminates the ADB light distribution pattern having the non-illumination area PH2 or the high beam light distribution pattern forward according to the presence or absence of the object.

The ADB illumination unit 46L may include, for example, a plurality of light emitting elements (for example, LEDs) arranged in a matrix (n rows × m columns, n and m are integers of 1 or more), and a projection lens that passes light emitted from the plurality of light emitting elements. In this case, the ADB illumination unit 46L can form the ADB light distribution pattern PH having the illumination area PH1 and the non-illumination area PH2 in front of the vehicle 1 by individually controlling turning on and off of each light emitting element.

As another configuration of the ADB illumination unit 46L, the ADB illumination unit 46L may include, for example, a light emitting element that emits light, a reflector, a micro electro mechanical systems (MEMS) mirror, and a projection lens. The reflector is configured to reflect light emitted from the light emitting element toward the MEMS mirror. The MEMS mirror is configured to reflect the light reflected by the reflector toward the projection lens. The MEMS mirror includes a plurality of micro-mirror elements arranged in a matrix (n rows × m columns). An angle between the plurality of micro-mirror elements is set to a first angle (ON state) at which light is reflected toward the projection lens or a second angle (OFF state) at which light is not reflected toward the projection lens in accordance with a control signal from an illumination unit controller 23L. In this way, by controlling the angle between the micro-mirror elements of the MEMS mirror, the ADB illumination unit 46L can form the ADB light distribution pattern PH having the illumination area PH1 and the non-illumination area PH2 in front of the vehicle 1.

As another configuration of the ADB illumination unit 46L, the ADB illumination unit 46L may be a blade scanning type illumination unit including a light emitting element that emits light and a rotating reflector in which a plurality of blades are provided around a rotation axis. The rotating reflector can scan the light by reflecting the light emitted from the light emitting element while rotating in one direction around the rotation axis. As described above, with the rotation of the rotating reflector, the ADB illumination unit 46L can form the ADB light distribution pattern PH having the illumination area PH1 and the non-illumination area PH2 in front of the vehicle 1.

The first camera 43L (an example of a first sensor) is disposed in the space SL, and is configured to acquire first image data (an example of first data) indicating the surrounding environment of the vehicle 1. The first camera 43L may include an imaging element such as a charge-coupled device (CCD) or a complementary MOS (CMOS), for example.

The cover cleaner 47L is disposed around the lamp cover 40L, and is configured to clean the lamp cover 40L by removing a foreign matter (for example, raindrops, snow, mud, dust, or the like) adhering to the lamp cover 40L. The cover cleaner 47L may be configured to remove a foreign matter or dirt adhering to the lamp cover 40L by spraying a cleaning liquid or air toward the lamp cover 40L.

The controller 20L is configured to control each of the low beam illumination unit 45L, the ADB illumination unit 46L, the first camera 43L, and the cover cleaner 47L. The controller 20L is implemented by, for example, at least one electronic control unit (ECU). The electronic control unit includes a computer system including one or more processors and one or more memories, and an electronic circuit (analog control circuit) including an active element such as a transistor and a passive element. The processor includes, for example, at least one of a CPU, an MPU, and a GPU. The memory includes a ROM and a RAM.

The controller 20L includes a camera controller 21L, a cleaner controller 22L, and the illumination unit controller 23L. The camera controller 21L is configured to control driving of the first camera 43L and to acquire the first image data from the first camera 43L. Further, as will be described later, the camera controller 21L is configured to acquire second image data acquired by the second camera 6 from the vehicle controller 3 illustrated in Fig. 2.

The cleaner controller 22L is configured to control the cover cleaner 47L. In particular, the cleaner controller 22L is configured to determine whether a foreign matter adheres to the lamp cover 40L based on the first image data, and then drive the cover cleaner 47L in response to the determination that a foreign matter adheres to the cover cleaner 47L.

The illumination unit controller 23L is configured to control the low beam illumination unit 45L and the ADB illumination unit 46L. In particular, the illumination unit controller 23L acquires information on an object (a front vehicle, a pedestrian, or the like) present around the vehicle 1 based on the first image data or the second image data. Thereafter, the illumination unit controller 23L is configured to control the ADB illumination unit 46L, based on the acquired information on the object, such that the object present around the vehicle 1 is included in the non-illumination area PH2 of the ADB light distribution pattern PH (see Fig. 4). The information on the object includes, for example, information on an angular position of the object.

More specifically, when it is determined that the front vehicle 1A is not present in front of the vehicle 1, the illumination unit controller 23L controls the ADB illumination unit 46L such that the high beam light distribution pattern (that is, the ADB light distribution pattern PH including only the illumination area PH1) is emitted forward. On the other hand, when it is determined that the front vehicle 1A is present in front of the vehicle 1, the illumination unit controller 23L acquires an angular position θ of the front vehicle 1A with respect to an optical axis of the ADB illumination unit 46L (in particular, an angular position of a left end of the front vehicle 1A and the angular position of a right end of the front vehicle 1A). Thereafter, the illumination unit controller 23L determines the non-illumination area PH based on the angular position θ of the front vehicle 1A, and then controls the ADB illumination unit 46L so that the ADB light distribution pattern PH is emitted forward.

The right sensing system 4R has the same configuration as that of the left sensing system 4L described above. Specifically, as illustrated in Fig. 1, the right sensing system 4R includes a low beam illumination unit 45R, an ADB illumination unit 46R, a first camera 43R, a cover cleaner 47R, and a controller (not illustrated). The low beam illumination unit 45R, the ADB illumination unit 46R, and the first camera 43R are disposed in a space SR positioned on a right front side of the vehicle 1. The space SR is a lamp chamber formed by a lamp housing 42R (an example of a housing) and a translucent lamp cover 40R (an example of a translucent cover). Each constituent element provided in the right sensing system 4R has the same configuration and function as each constituent element provided in the left sensing system 4L described above, and thus the description thereof will be omitted here. In this regard, the controller (not illustrated) provided in the right sensing system 4R has the same function and configuration as those of the controller 20L illustrated in Fig. 3.

Returning to Fig. 2, the sensor 5 includes at least one of an acceleration sensor, a speed sensor, and a gyro sensor. The sensor 5 is configured to detect a traveling state of the vehicle 1 and output traveling state information to the vehicle controller 3. The sensor 5 may further include a seating sensor that detects whether a driver is seated in the driver's seat, a face direction sensor that detects a direction of a face of the driver, an external weather sensor that detects an external weather condition, a human sensor that detects whether there is a person in the vehicle, and the like.

The second camera 6 may include an imaging element such as a CCD or a CMOS, for example. As illustrated in Fig. 1, the second camera 6 is disposed in the interior of the vehicle 1 so as to face a front window 70 of the vehicle 1. The second camera 6 is configured to acquire second image data (an example of second data) indicating the surrounding environment of the vehicle 1 and then transmit the second image data to the vehicle controller 3. The vehicle controller 3 may specify surrounding environment information indicating the surrounding environment of the vehicle (that is, an attribute, the position information, and the like of the object) based on the second image data transmitted from the second camera and the trained model stored in the memory.

The radar 7 includes at least one of a millimeter wave radar, a microwave radar and a laser radar (for example, a LiDAR unit). For example, the LiDAR unit is configured to detect the surrounding environment of the vehicle 1. In particular, the LiDAR unit is configured to acquire 3D mapping data (point cloud data) indicating the surrounding environment of the vehicle 1 and then transmit the 3D mapping data to the vehicle controller 3. The vehicle controller 3 specifies the surrounding environment information based on the transmitted 3D mapping data.

The HMI 8 is configured with an input unit that receives an input operation from the driver and an output unit that outputs traveling information and the like to the driver. The input unit includes a steering wheel, an accelerator pedal, a brake pedal, a driving mode switching switch for switching a driving mode of the vehicle 1, and the like. The output unit is a display (for example, a head up display (HUD)) that displays various types of traveling information. The GPS 9 is configured to acquire current position information on the vehicle 1 and output the acquired current position information to the vehicle controller 3.

The wireless communication unit 10 is configured to receive information on other vehicles around the vehicle 1 from the other vehicles and transmit information on the vehicle 1 to the other vehicles (vehicle-to-vehicle communication). In addition, the wireless communication unit 10 is configured to receive infrastructure information from infrastructure equipment such as a traffic signal or a marker lamp, and transmit the traveling information on the vehicle 1 to the infrastructure equipment (road-to-vehicle communication). In addition, the wireless communication unit 10 is configured to receive information on a pedestrian from a portable electronic device (a smartphone, a tablet, a wearable device, or the like) carried by the pedestrian, and transmit own vehicle traveling information on the vehicle 1 to the portable electronic device (pedestrian-to-vehicle communication). The vehicle 1 may directly communicate with another vehicle, the infrastructure equipment, or the portable electronic device in an ad hoc mode, or may communicate with the other vehicle, the infrastructure equipment, or the portable electronic device via a communication network such as the Internet.

The storage device 11 is an external storage device such as a hard disk drive (HDD) or a solid state drive (SSD). The storage device 11 may store two-dimensional or three-dimensional map information and/or a vehicle control program. For example, the three-dimensional map information may be composed of 3D mapping data (point cloud data). The storage device 11 is configured to output map information and a vehicle control program to the vehicle controller 3 in response to a request from the vehicle controller 3. The map information and the vehicle control program may be updated via the wireless communication unit 10 and the communication network.

When the vehicle 1 travels in an automatic driving mode, the vehicle controller 3 automatically generates at least one of a steering control signal, an accelerator control signal, and a brake control signal based on the traveling state information, the surrounding environment information, the current position information, the map information, and the like. The steering actuator 12 is configured to receive a steering control signal from the vehicle controller 3 and control the steering device 13 based on the received steering control signal. The brake actuator 14 is configured to receive a brake control signal from the vehicle controller 3 and control the brake device 15 based on the received brake control signal. The accelerator actuator 16 is configured to receive an accelerator control signal from the vehicle controller 3 and control the accelerator device 17 based on the received accelerator control signal. As described above, the vehicle controller 3 automatically controls the traveling of the vehicle 1 based on the traveling state information, the surrounding environment information, the current position information, the map information, and the like. That is, in the automatic driving mode, the traveling of the vehicle 1 is automatically controlled by the vehicle system 2.

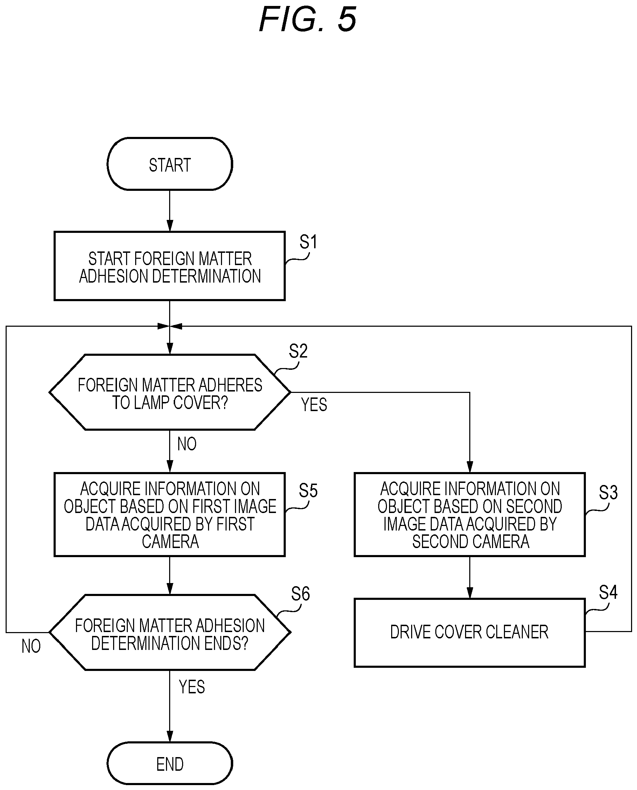

Next, a foreign matter adhesion determination process executed by the left sensing system 4L will be described below with reference to Fig. 5. Fig. 5 is a flowchart illustrating the foreign matter adhesion determination process. It is assumed that the right sensing system 4R also performs the same foreign matter adhesion determination process.

As illustrated in Fig. 5, in step S1, the cleaner controller 22L starts foreign matter adhesion determination for determining whether a foreign matter (raindrops, snow, mud, dust, or the like) adheres to the lamp cover 40L. In step S2, the cleaner controller 22L determines whether a foreign matter adheres to the lamp cover 40L based on the first image data acquired by the first camera 43L. In this regard, since the first camera 43L is disposed in the space SL, the lamp cover 40L is included in a field of view of the first camera 43L. Therefore, when a foreign matter is present on the lamp cover 40L, the presence of the foreign matter can be specified from the first image data.

Specifically, the cleaner controller 22L determines whether a pixel value correlated with luminance of each pixel constituting the first image data is equal to or greater than a predetermined threshold value. Here, the pixel value of the pixel correlates with the luminance of the pixel. That is, the pixel value of the pixel increases as the luminance of the pixel increases, whereas the pixel value of the pixel decreases as the luminance of the pixel decreases. Next, the cleaner controller 22L specifies a pixel having a pixel value equal to or greater than a predetermined threshold value, and then determines whether a foreign matter adheres to the lamp cover 40L based on information on the pixel having the pixel value equal to or greater than the predetermined threshold value. In this regard, it is preferable that the foreign matter adhesion determination is performed in a situation where the surroundings of the vehicle 1 are dark (for example, at night). In a dark situation around the vehicle 1, light is emitted forward from the low beam illumination unit 45L and/or the ADB illumination unit 46L (hereinafter referred to as an illumination unit). That is, the light emitted from the illumination unit passes through the lamp cover 40L. When a foreign matter adheres to the lamp cover 40L, the light emitted from the illumination unit is reflected by the foreign matter, and then the reflected light is incident on the first camera 43L. As described above, in the first image data acquired by the first camera 43L, a pixel value (luminance) of a pixel belonging to an area in which a foreign matter is present is larger than a pixel value (luminance) of a pixel belonging to an area in which a foreign matter is not present. In this way, by focusing on the pixel value of each pixel of the first image data, it is possible to specify the pixel belonging to the area in which a foreign matter is present.

The information on the pixel having the pixel value equal to or greater than the predetermined threshold value is, for example, 1) an area of a pixel group including pixels having a pixel value equal to or greater than the predetermined threshold value, 2) the number of pixels having the pixel value equal to or greater than the predetermined threshold value, or 3) a ratio of the pixels having the pixel value equal to or greater than the predetermined threshold value to all the pixels constituting the first image data.

That is, the cleaner controller 22L may determine that a foreign matter adheres to the lamp cover 40L when the area of the pixel group including pixels having the pixel value equal to or greater than the predetermined threshold value is equal to or greater than a predetermined area. Conversely, the cleaner controller 22L may determine that no foreign matter adheres to the lamp cover 40L when the area of the pixel group is smaller than the predetermined area. In addition, the cleaner controller 22L may determine that a foreign matter adheres to the lamp cover 40L when the number of pixels having the pixel value equal to or greater than the predetermined threshold value is equal to or greater than a predetermined number. Conversely, the cleaner controller 22L may determine that no foreign matter adheres to the lamp cover 40L when the number of pixels having the pixel value equal to or greater than the predetermined threshold value is smaller than the predetermined number. Further, the cleaner controller 22L may determine that a foreign matter adheres to the lamp cover 40L when the ratio of pixels having the pixel value equal to or greater than the predetermined threshold value to all pixels constituting the first image data is equal to or greater than a predetermined ratio. Conversely, the cleaner controller 22L may determine that no foreign matter adheres to the lamp cover 40L when the ratio is smaller than the predetermined ratio.

Next, when the cleaner controller 22L determines that a foreign matter adheres to the lamp cover 40L (YES in step S2), the cleaner controller 22L requests the vehicle controller 3 to transfer the second image data acquired by the second camera 6. Thereafter, the cleaner controller 22L receives the second image data from the vehicle controller 3. Next, the illumination unit controller 23L acquires the information on the object such as a front vehicle (in particular, information on an angular position of the front vehicle) based on the second image data (step S3). Thereafter, the illumination unit controller 23L causes the ADB illumination unit 46L to illuminate the ADB light distribution pattern PH such that the object is positioned in the non-illumination area PH2 of the ADB light distribution pattern PH.

Next, the cleaner controller 22L drives the cover cleaner 47L to remove a foreign matter adhering to the lamp cover 40L (step S4). Thereafter, the process of determining again whether a foreign matter adheres to the lamp cover (the process of step S2) is executed.

On the other hand, when the cleaner controller 22L determines that no foreign matter adheres the lamp cover 40L (NO in step S2), the illumination unit controller 23L acquires the information on the object such as a front vehicle (in particular, the information on the angular position of the front vehicle) based on the first image data acquired by the first camera 43L (step S5). Thereafter, the illumination unit controller 23L causes the ADB illumination unit 46L to illuminate the ADB light distribution pattern PH such that the object is positioned in the non-illumination area PH2 of the ADB light distribution pattern PH.

Next, when the foreign matter adhesion determination ends (YES in step S6), the cleaner controller 22L ends a series of processes illustrated in Fig. 5. On the other hand, when the foreign matter adhesion determination does not end (NO in step S6), the cleaner controller 22L executes the process of step S2 again.

According to the present embodiment, when no foreign matter adheres to the lamp cover 40L, the information on the angular position of the object existing outside the vehicle 1 is acquired based on the first image data from the first camera 43L disposed in the space SL formed by the lamp cover 40L and the lamp housing 42L. Thereafter, the illumination of the ADB light distribution pattern PH is controlled based on the information on the angular position of the object. On the other hand, when a foreign matter adheres to the lamp cover 40L, the information on the angular position of the object is acquired based on the second image data from the second camera 6 disposed in the interior of the vehicle 1. Thereafter, the illumination of the ADB light distribution pattern PH is controlled based on the information on the angular position of the object. As described above, it is possible to provide the left sensing system 4L capable of preventing a decrease in recognition accuracy with respect to the object even when a foreign matter adheres to the lamp cover 40L. Further, it is possible to suitably prevent a situation in which glare light is given to an occupant of the front vehicle.

In this regard, since the second camera 6 is disposed in the interior of the vehicle 1 so as to face the front window 70, it is possible to prevent a situation in which a foreign matter adheres to the second camera 6. Further, the foreign matter adhering to the front window 70 positioned in the field of view of the second camera 6 is reliably removed by a wiper (not illustrated) provided in the front window 70. In this way, it is possible to suitably prevent a situation in which a foreign matter is reflected in the second image data acquired by the second camera 6. Therefore, even when a foreign matter adheres to the lamp cover 40L, the controller 20L can reliably acquire the information on the object based on the second image data in which the foreign matter is not reflected. Therefore, since the controller 20L can control the illumination of the ADB light distribution pattern PH such that the front vehicle is included in the non-illumination area PH2 of the ADB light distribution pattern PH, it is possible to suitably prevent a situation in which glare light is given to the occupant of the front vehicle.

According to the present embodiment, it is determined whether a foreign matter adheres to the lamp cover 40L based on the first image data acquired by the first camera 43L. Further, when no foreign matter adheres to the lamp cover 40L, information on an object such as a front vehicle is acquired based on the first image data. In this way, the first image data can be efficiently used to specify the presence of both the object and the foreign matter.

Although the embodiment of the present invention has been described above, it is needless to say that the technical scope of the present invention should not be limitedly interpreted by the description of the present embodiment. It is to be understood by those skilled in the art that the present embodiment is merely an example, and various modifications of the embodiment can be made within the scope of the invention described in the claims. The technical scope of the present invention should be determined based on the scope of the invention described in the claims and an equivalent scope thereof.

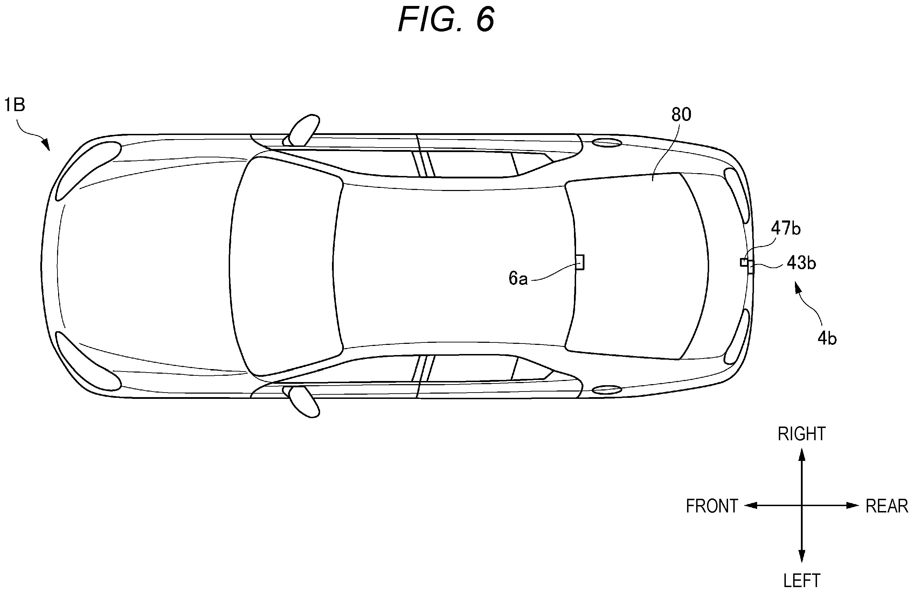

For example, in the present embodiment, the lamp cover and the lamp housing are cited as examples of the translucent cover and the housing, but the translucent cover and the housing of the present embodiment are not limited thereto. For example, as illustrated in Fig. 6, a translucent cover and a housing of a rear camera module 43b installed on a rear side of a vehicle 1B may be another example of the translucent cover and the housing. In this case, the rear camera module 43b is configured to acquire the surrounding environment information indicating an rear area of the vehicle 1B. The rear camera module 43b includes a translucent cover, a housing, and a first camera. The first camera is disposed in a space formed by the translucent cover and the housing of the rear camera module 43b, and is configured to acquire the first image data. A cover cleaner 47b is provided around the rear camera module 43b, and is configured to remove a foreign matter adhering to the translucent cover of the rear camera module 43b. Further, a second camera 6a that acquires the second image data is disposed in the interior of the vehicle 1B so as to face a rear window 80 of the vehicle 1B.

A vehicle sensing system 4b includes the rear camera module 43b, the cover cleaner 47b, and a controller (not illustrated) including an ECU. The vehicle sensing system 4b may be configured to execute the foreign matter adhesion determination process illustrated in Fig. 5. The vehicle sensing system 4b adopts one of the first image data acquired by the first camera and the second image data acquired by the second camera 6a according to a determination result of whether a foreign matter adheres to the translucent cover of the rear camera module 43b. Thereafter, the vehicle sensing system 4b may specify the surrounding environment information indicating the rear area of the vehicle 1B based on one of the adopted first image data and the adopted second image data.

As described above, it is possible to provide the vehicle sensing system 4b capable of preventing a decrease in recognition accuracy with respect to the surrounding environment information even when a foreign matter adheres to the translucent cover of the rear camera module 43b.

In the present embodiment, the first camera and the second camera are exemplified as examples of the first sensor and a second sensor, but the first sensor and the second sensor of the present embodiment are not limited to cameras. For example, a first LiDAR unit may be adopted instead of the first camera, and a second LiDAR unit may be adopted instead of the second camera. The left sensing system 4L illustrated in Fig. 3 may adopt any one of first point cloud data acquired by the first LiDAR unit and second point cloud data acquired by the second LiDAR according to the determination result of whether a foreign matter adheres to the lamp cover 40L. Thereafter, the left sensing system 4L may specify the surrounding environment information indicating a surrounding area of the vehicle 1 based on one of the adopted first point cloud data and the adopted second point cloud data.

In the present embodiment, the sensing system for a vehicle mounted on a vehicle has been described, but the sensing system is not limited to the sensing system for a vehicle. In this regard, the sensing system may be a sensing system for a monitoring camera installed on a road. In this case, the sensing system for a monitoring camera includes a first monitoring camera unit, a second monitoring camera unit, a controller, and a cover cleaner. The first monitoring camera unit is disposed in a space formed by the translucent cover and the housing, and is configured to acquire first image data indicating a surrounding environment. On the other hand, the second monitoring camera unit is disposed outside the space formed by the translucent cover and the housing, and is configured to acquire second image data indicating the surrounding environment. The controller is implemented by, for example, a microcontroller including a processor and a memory. The cover cleaner is provided around the translucent cover, and is configured to remove a foreign matter adhering to the translucent cover. When no foreign matter adheres to the translucent cover, the controller acquires information on an object such as a pedestrian or a vehicle based on the first image data acquired by the first monitoring camera unit. On the other hand, when a foreign matter adheres to the translucent cover, the controller acquires information on the object based on the second image data acquired by the second monitoring camera unit. As described above, the sensing system according to the present embodiment sufficiently functions as a sensing system for a monitoring camera.

The present application appropriately incorporates the contents disclosed in Japanese Patent Application (Japanese Patent Application No. 2020-141045) filed on August 24, 2020.

## Claims

1. A sensing system comprising:
a controller configured to acquire information on an object existing outside the sensing system;
a first sensor disposed in a space formed by a translucent cover and a housing and configured to acquire first data indicating a surrounding environment of the outside; and
a cover cleaner configured to remove a foreign matter adhering to the translucent cover,
wherein the controller is configured to:
determine whether a foreign matter adheres to the translucent cover, and drive the cover cleaner in response to determination that a foreign matter adheres to the translucent cover;
acquire the information on the object based on the first data when no foreign matter adheres to the translucent cover; and
acquire second data indicating a surrounding environment of the outside from a second sensor disposed outside the space, and then acquire the information on the object based on the acquired second data when a foreign matter adheres to the translucent cover.

2. The sensing system according to claim 1, further comprising:
an illumination unit disposed in the space and configured to emit a light distribution pattern having an illumination area and a non-illumination area toward the outside,
wherein the controller is configured to control the illumination unit such that the object is included in the non-illumination area of the light distribution pattern.

3. The sensing system according to claim 1 or 2,
wherein the first sensor is a first camera configured to acquire first image data indicating the surrounding environment of the outside, and
wherein the controller is configured to determine whether a foreign matter adheres to the translucent cover based on the first image data.

4. The sensing system according to claim 3,
wherein the controller is configured to:
determine whether a pixel value correlated with luminance of each of pixels constituting the first image data is equal to or greater than a predetermined threshold value; and
determine whether a foreign matter adheres to the translucent cover based on information on a pixel having a pixel value equal to or greater than the predetermined threshold value.

5. The sensing system according to any one of claims 1 to 4,
wherein the sensing system is provided in a vehicle, and
wherein the second sensor is disposed in interior of the vehicle.

6. The sensing system according to claim 5,
wherein the second sensor is disposed so as to face a front window or a rear window of the vehicle.

7. A vehicle comprising the sensing system according to any one of claims 1 to 6.
